# EUROPEAN PATENT APPLICATION

(11) **EP 4 835 847 A1**
(43) Date of publication of application: **04.11.2026**
(21) Application number: 26171953.8
(22) Date of filing: 13.04.2026
(51) Int. Cl.: G06V 30/414, G06F 40/14, G06F 40/30, G06F 40/35, G06F 40/44, G06F 40/56, G06F 40/131, G06F 40/216, G06V 30/413, G06V 30/416

(54) **SYSTEMS AND METHODS FOR HYBRID DOCUMENT PROCESSING**

(30) Priority: 28.04.2025 US 202563796266 P; 05.06.2025 US 202519229847
(71) Applicant: Palantir Technologies Inc., Aventura, Florida 33180 (US)
(72) Inventor: ABDULMAHMOOD, Mazin, Aventura, 33180 (US)
(74) Representative: Sayer, Robert David

(57) **Abstract**

In some examples, systems and methods for document processing are provided. An example method for document processing is provided. In some examples, the method includes receiving an unstructured document including one or more pieces of content, the one or more pieces of content including one or more media elements; providing the unstructured document to a layout model; receiving one or more pieces of layout data associated with one or more pieces of content from the layout model, each piece of layout data of the one or more pieces of layout data including a layout indication and a content type; identifying a page including at least one of the one or more media elements; generating an extraction prompt including at least one piece of layout data corresponding to at least one of the one or more media elements; providing the extraction prompt to a multimodal model.

## Description

This application claims the benefit of U.S. Provisional Application No. 63/796,266, filed April 28, 2025.

### TECHNICAL FIELD

Certain embodiments of the present disclosure relate to document processing (e.g., content extraction). More particularly, certain embodiments of the present disclosure relate to hybrid document (e.g., documents including texts and media elements, etc.) processing which may improve accuracy, efficiency and computational cost.

### BACKGROUND

In some examples, organizations often process many different types of documents, such as documents including texts, images, tables, charts, and/or the like. In certain embodiments, organizations often would like to extract content from the different types of documents (e.g., Word^{™} documents, PDF (portable document format) documents, presentation documents, CAD (computer-aided design) documents, etc.) by processing the different types of documents.

Hence, it is desirable to improve techniques for document processing.

### SUMMARY

Certain embodiments of the present disclosure relate to document processing (e.g., content extraction). More particularly, certain embodiments of the present disclosure relate to hybrid document (e.g., documents including texts and media elements, etc.) processing.

At least some aspects of the present disclosure are directed to a method for document processing. In some examples, the method includes receiving an unstructured document including one or more pieces of content, the one or more pieces of content including one or more unstructured text strings and one or more media elements; providing the unstructured document to a layout model; receiving one or more pieces of layout data associated with one or more pieces of content from the layout model, each piece of layout data of the one or more pieces of layout data including a layout indication and a content type, the content type including at least one selected from a group consisting of a text content type and a media content type; identifying a page including at least one of the one or more media elements; generating an extraction prompt including at least one piece of layout data corresponding to at least one of the one or more media elements; providing the extraction prompt to a multimodal model; receiving one or more pieces of content data associated with the at least one of the one or more media elements from the multimodal model; and generating an output data including the one or more pieces of content data. The method is performed using one or more processors.

At least some aspects of the present disclosure are directed to a system for document processing. In some examples, the system includes one or more processors, and one or more memories storing instructions that, when executed by the one or more processors, cause the system to perform a set of operations. In some examples, the set of operations include: receiving an unstructured document including one or more pieces of content, the one or more pieces of content including one or more unstructured text strings and one or more media elements; providing the unstructured document to a layout model; receiving one or more pieces of layout data associated with one or more pieces of content from the layout model, each piece of layout data of the one or more pieces of layout data including a layout indication and a content type, the content type including at least one selected from a group consisting of a text content type and a media content type; identifying a page including at least one of the one or more media elements; generating an extraction prompt including at least one piece of layout data corresponding to at least one of the one or more media elements; providing the extraction prompt to a multimodal model; receiving one or more pieces of content data associated with the at least one of the one or more media elements from the multimodal model; and generating an output data including the one or more pieces of content data.

At least some aspects of the present disclosure are directed to a non-transitory computer-readable storage medium having instructions for document processing that, when executed by one or more processors, cause the one or more processors to perform operations comprising: receiving an unstructured document including one or more pieces of content, the one or more pieces of content including one or more unstructured text strings and one or more media elements; providing the unstructured document to a layout model; receiving one or more pieces of layout data associated with one or more pieces of content from the layout model, each piece of layout data of the one or more pieces of layout data including a layout indication and a content type, the content type including at least one selected from a group consisting of a text content type and a media content type; identifying a page including at least one of the one or more media elements; generating an extraction prompt including at least one piece of layout data corresponding to at least one of the one or more media elements; providing the extraction prompt to a multimodal model; receiving one or more pieces of content data associated with the at least one of the one or more media elements from the multimodal model; and generating an output data including the one or more pieces of content data.

Depending upon embodiment, one or more benefits may be achieved. For example, some example embodiments may provide a selective routing system wherein pages with media elements may be routed to a multimodal model, whereas text-only pages may bypass it. This leads to computational efficiencies. For example, some example embodiments involve detecting layout using a trained layout model as a form of image analysis. For example, some example embodiments may provide a system that can run a box-constrained OCR (for text). For example, some example embodiments may improve resource usage by processing only pages with media content. For example, some example embodiments may generate structured output, e.g., JSON output, suitable for improved machine usage. These benefits and various additional objects, features and advantages of the present disclosure can be fully appreciated with reference to the detailed description and accompanying drawings that follow.

### BRIEF DESCRIPTION OF THE DRAWINGS

FIG. 1 is a simplified diagram showing a diagram and/or workflow for document processing according to certain embodiments of the present disclosure. This diagram is merely an example.
FIG. 2 is a simplified diagram showing a diagram and/or workflow for document processing according to certain embodiments of the present disclosure.
FIG. 3 is a simplified diagram showing a method for document processing according to certain embodiments of the present disclosure.
FIG. 4 is an illustrative computing environment for document processing according to certain embodiments of the present disclosure.
FIG. 5A illustrates an example document page and FIG. 5B illustrates an example annotated document page.
FIG. 6 is a simplified diagram showing a computing system for implementing a system for document processing in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any range within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

Conventional systems and methods often cannot efficiently extract document content from various documents. In certain examples, the existing systems often use OCR (optical character recognition) to extract contents, which cannot properly extract contents from documents including media elements such as charts, diagrams, images, and/or the like. In some examples, the existing systems often provide the entire document and/or document pages to large computing models (e.g., large language models, etc.) for processing, such that it is a computing resource intensive process. Additionally, using the computing models alone, the existing systems can run into hallucination issues; for example, text extractions using the computing models may not lead to proper summaries.

Various embodiments of the present disclosure can achieve benefits and/or improvement over conventional systems by a computing system using a layout model to document pages to gather one or more pieces of layout data and applying a multimodal model to document pages using the one or more pieces of layout data. In some embodiments, benefits include improved efficiency of a computing system for document processing by using a multimodal computing model to process only document pages including media content (e.g., images, charts, tables, etc.). In certain embodiments, a document refers to an electronic file. In some examples, a document can be an electronic file capturing a paper document that is scanned electronically. In certain embodiments, a hybrid document refers to a document including two or more types of content, for example, such as text content, image content, charts, diagrams, tables, and/or the like. In some embodiments, content that is not text content is referred to as media content.

In certain examples, a piece of media content includes an image, a diagram, a table, a chart, a piece of audio content, a piece of video content, and/or the like. In some examples, a document includes a lot of document pages that do not include any media content, such that the computing system of the present disclosure uses a multimodal computing model to process a small percentage (e.g., less than 50%, less than 20%, less than 10%, etc.) of document pages of a document, such that it greatly reduces the use of computing resources. Additional and/or alternative benefits should be recognized by those of ordinary skill in the art, at least in light of the teachings provided herein.

According to certain embodiments, systems and methods of the present disclosure use a layout model to process a document to classify one or more content types for one or more pieces of content and determine layout data for the one or more pieces of content, and use a multimodal computing model to process one or more document pages that include media content. In some embodiments, a content type can be a text content type or a media content type. In certain embodiments, a text content type refers to a type of content including one or more text elements (e.g., one or more text strings, one or more unstructured text strings, etc.). In some embodiments, a media content type refers to a type of content including media elements, where media elements include, for example, one or more image elements, one or more table elements, one or more chart elements, one or more audio elements, and/or one or more video elements, besides text elements. For example, a piece of media content, also referred to as a media element, can include an image, a diagram, a table, a chart, a piece of audio content, a piece of video content, and/or the like.

In some embodiments, a layout model refers to a computing model that can generate layout data of a document page. In certain embodiments, the layout model includes a custom-trained layout model. In some embodiments, a trained layout model is trained using a training dataset including a plurality of document pages that are annotated. In certain embodiments, an annotated document page includes one or more indications of content types, one or more layout indications for one or more pieces of content, and one or more order indications for processing.

In some embodiments, a layout indication, includes a bounding box, four corners of the bounding box, a center position of a piece of content, and/or other position parameters associated with the piece of content. In certain embodiments, a computing model includes a model to process and/or generate data. A model includes, for example, an artificial intelligence (AI) model, a machine learning (ML) model, a generative AI (GenAI) model, a deep learning (DL) model, an image processing model, an algorithm, a rule, a GenAI model, a language model, a large language mode, other computing models, and/or a combination thereof. In some embodiments, a GenAI model is a type of AI model that can be used to produce various types of content, such as text, images, videos, audio, 3D (three-dimensional) data, 3D models, and/or the like. In some embodiments, a language model (LM) or a large language model (LLM), is a type of GenAI model that can generate content (e.g., text, audio, video, or other form, etc.).

In certain embodiments, a multimodal computing model refers to a computing model that can process documents including both text content and media content. In certain embodiments, the computing model includes a language model (LM) that may include an algorithm, rule, model, and/or other programmatic instructions that can predict the probability of a sequence of words. In some embodiments, a language model may, given a starting text string (e.g., one or more words), predict the next word in the sequence. In certain embodiments, a language model may calculate the probability of different word combinations based on the patterns learned during training (based on a set of text data from books, articles, websites, audio files, etc.). In some embodiments, a language model may generate many combinations of one or more next words (and/or sentences) that are coherent and contextually relevant. In certain embodiments, a language model can be an artificial intelligence model that has been trained to understand, generate, and manipulate language. In some embodiments, a language model can be useful for natural language processing, including receiving natural language prompts and providing natural language responses. In certain embodiments, a language model may include an n-gram, exponential, positional, neural network, and/or other type of model.

In certain embodiments, the computing model includes a large language model (LLM), which was trained on a larger data set and has a larger number of parameters (e.g., millions of parameters, trillions of parameters, etc.). In certain embodiments, an LLM can understand complex textual inputs and generate coherent responses due to its extensive training. In certain embodiments, an LLM can use a transformer model that uses context and tracks relationships, and uses an attention mechanism. In some embodiments, a language model includes an autoregressive language model, such as a Generative Pre-trained Transformer 3 (GPT-3) model, a GPT 3.5-turbo model, a GPT-4 model, a GPT-4o model, a Claude model, a command-xlang model, a bidirectional encoder representations from transformers (BERT) model, a pathways language model (PaLM) 2, and/or the like.

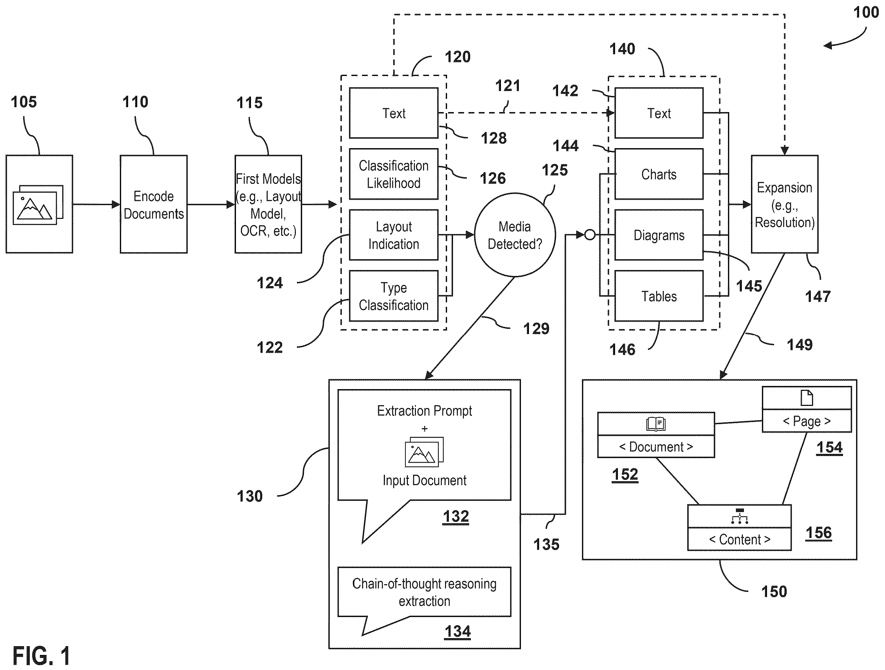

FIG. 1 is a simplified diagram showing a diagram and/or workflow 100 for document processing according to certain embodiments of the present disclosure. This diagram is merely an example. One of ordinary skill in the art would recognize many variations, alternatives, and modifications. The diagram and/or workflow 100 includes processes and/or components 105-156. Although the above has been shown using a selected group of processes and/or components for the diagram and/or workflow 100, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the diagram and/or the workflow 100 are performed by a system (e.g., the computing system 600). In certain examples, some or all processes (e.g., steps) of the diagram and/or the workflow 100 are performed by a computer and/or a processor directed by a code. For example, a computer includes a server computer and/or a client computer (e.g., a personal computer). In some examples, some or all processes (e.g., steps) of the diagram and/or the workflow 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 105, the system receives one or more unstructured documents. In certain embodiments, an unstructured document includes one or more unstructured text strings and one or more media elements. In some embodiments, an unstructured text string is also referred to as a piece of text content that includes only texts. In certain embodiments, a media element is also referred to as a piece of media content that includes at least one media component including, for example, such as an image, a table, a diagram, a chart, a piece of audio content, a piece of video content, and/or the like. In some embodiments, at process 110, the system encodes documents based on a document type (e.g., PDF document, CAD document, etc.) and/or one or more document contents in the document.

According to certain embodiments, at process 115, the system applies a set of first models (e.g., layout models, OCR algorithms, etc.) to an unstructured document. In some embodiments, when the process 105 includes two or more unstructured documents, the system processes the unstructured documents sequentially (e.g., one document at a time, etc.). In certain embodiments, the set of first models include a layout model and/or a character recognition model. In some embodiments, a layout model includes a transformer-based layout model. In certain embodiments, the layout model is trained using a set of training documents. In some examples, the layout model is a customized layout model, for example, a customized model trained using a set of training documents.

In certain embodiments, the set of training documents includes annotated documents, where an annotated document includes an indication of a content type of a piece of content on a document page, an indication of layout information of the piece of content, an order indication (e.g., an order indicated by identifiers (IDs), etc.) of the piece of content, and/or the like. In some examples, an indication of the layout data includes a bounding box around the piece of content. In certain examples, an order indication includes an order for processing the piece of content. In some examples, the order indication includes a number indicating the order. In certain examples, a first piece of content is associated with a first order indication and a second piece of content is associated with a second order indication, where the first and second order indications provide information that the first piece of content is to be processed before the second piece of content. For example, the left column data associated with an ID (identifier) 3, is to be processed before the right column data associated with an ID 4.

According to some embodiments, the system generates and/or receives one or more pieces of layout data 120 corresponding to one or more pieces of content in the unstructured document using the layout model. In certain embodiments, the system generates and/or receives a piece of layout data for every piece of content (e.g., a paragraph, an image, a chart, a table, etc.) in the unstructured document. In some embodiments, a piece of layout data 120 includes a layer content identifier (ID), a type classification 122, a layout indication 124, a classification likelihood 126, a piece of layout content data (e.g., one or more text strings 128, other layout content data, etc.), and/or the like. In some embodiments, a content ID is a content ID (e.g., a single-digit content ID, a double-digit content ID, etc.) for a page (e.g., each page has a set of content IDs, etc.). In certain embodiments, the type classification 122, also referred to as a layout content type, includes at least one selected from a group consisting of a text content type and a media content type. In some embodiments, the media content type includes at least one selected from a group consistent of an image content type, a table content type, an image content type, a chart content type, and/or the like.

In certain embodiments, a layout indication 124 includes information of a bounding box, a center position, and/or other position data. In some embodiments, a classification likelihood 126 is a confidence score of the type classification 122. In certain embodiments, the text string 128 (e.g., an unstructured text string, etc.) is extracted by an OCR program for a piece of text content, for example, text content within a box, a paragraph, and/or the like. In some embodiments, a piece of layout data 120 includes an order indication of a piece of content (e.g., an order number on a page, an order number within the documents, etc.).

According to certain embodiments, at process 125, the system determines whether media content is detected on a document page, also referred to as a page. In some embodiments, at process 129, the system identifies one or more document pages including media content. In certain embodiments, if media content is detected on the document page, the system selectively routes the document page to a set of second models (e.g., one or more multimodal computing models, etc.). In certain embodiments, a multimodal computing model includes a vision large language model (LLM) (e.g., a GPT-4o model, a Claude model, etc.). In some embodiments, if media content is detected on the document page, the system draws one or more bounding boxes on the document page to generate an annotated page, where the one or more bounding boxes are drawn according to one or more layout indications in the piece of layout data corresponding to one or more pieces of media content. In certain embodiments, if media content is detected on the document page, the system draws one or more bounding boxes and optionally annotates the one or more bounding boxes with IDs (identifiers) on the document page according to one or more layout indications in the piece of layout data corresponding to one or more pieces of media content to generate an annotated page. In some embodiments, the system instructs the set of second models to capture the content inside one or more drawn bounding boxes.

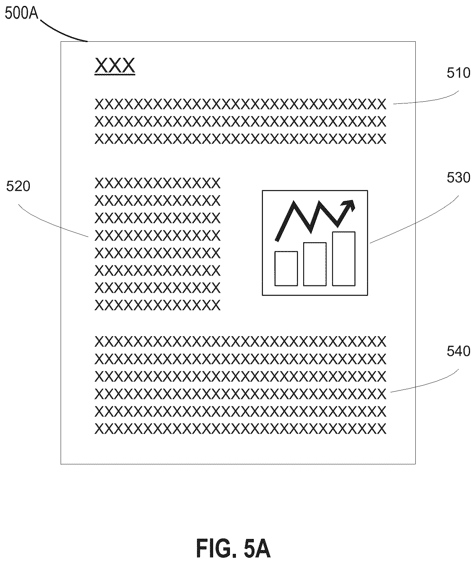

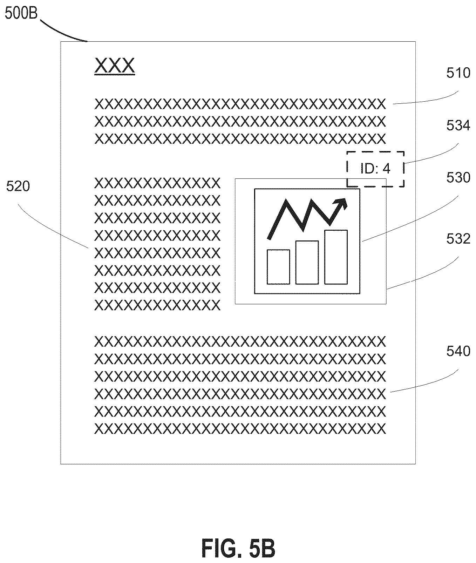

FIG. 5A illustrates an example document page 500A and FIG. 5B illustrates an example annotated document page 500B. FIGS. 5A and 5B are merely examples. One of ordinary skill in the art would recognize many variations, alternatives, and modifications. In the example illustrated, the document page 500A includes a piece of text content 510, a piece of text content 520, a piece of media content 530, and a piece of text content 540. In some examples, the system draws a bounding box 532 around the piece of media content 530 on the document page 500B, for example, based on a layout indication in the piece of layout data. In certain examples, the system marks an identifier 534 on the document page 500B. In some examples, the system marks an identifier 534 on the document page 500B based on a corresponding content identifier. In certain embodiments, the piece of text content 520 can be used as context information for the piece of media content 530.

Referring back to FIG. 1, according to some embodiments, the system uses a layout model, an OCR algorithm, and/or a vision large language model (e.g., a vision LLM, etc.) with a custom setup. In some embodiments, the system can be used as a generic PDF document parsing product, which is highly scalable by using computationally inexpensive layout transformer models to generate layout classifications enabling an understanding of which document pages the system can run a box-constrained OCR (for text) (e.g., applying an OCR algorithm to the text within a bounding box), and which pages to run the vision LLM to extract and transcribe one or more pieces of media content. For example, tables can be extracted into a JSON (JavaScript Object Notation) data format and/or Markdown data format (e.g., a lightweight markup language), and charts can be transcribed into detailed text.

According to certain embodiments, at process 130, the system applies the set of second models to one or more identified document pages. In some embodiments, the process 130 includes process 132 to generate an extraction prompt and/or process 134 of a multimodal computing model performing a chain-of-thought reasoning extraction. In certain embodiments, at process 132, the system generates an extraction prompt to be provided with the document page (e.g., a document page in the input document, etc.). In some embodiments, the extraction prompt includes the annotated page. In certain embodiments, the extraction prompt includes an indication of an output data structure (e.g., a JSON structure, etc.). In some embodiments, the output data structure includes a content identifier (e.g., a box identifier, etc.), a content type, a layout indication, a context indication, a content description, and/or the like.

In some embodiments, the extraction prompt includes one or more prompts requesting a chain of actions, also referred to as a chain-of-thought prompt. In some embodiments, a chain of prompts is a chain-of-thought prompt including two or more requests. In certain embodiments, the one or more prompts include at least one selected from a group consisting of a prompt for determining a content type, a prompt for determining a context for a piece of content, and a prompt for extracting the content. In some embodiments, the system provides the extraction prompt to the set of second models (e.g., a multimodal computing model, etc.). In certain embodiments, the extraction prompt includes a chain-of-thought prompt including a first request and a second request, where the first request is to be ingested by a multimodal computing model before the second request. In some embodiments, the extraction prompt includes a chain of prompts including a first prompt and a second prompt, where the first prompt is to be ingested by a multimodal computing model before the second prompt.

According to some embodiments, at process 134, the system requests the set of second models to conduct the chain-of-thought reasoning extraction using a chain-of-thought prompt (e.g., one prompt, one or more prompts, etc.). For example, the one or more chain-of-thought prompts include explicit requests like "Let's think step by step", which forces the set of second models to output its reasoning as it understands and processes a document page. In some examples, the set of second models can finalize with the output (e.g., JSON output, etc.) for the parsed media objects (e.g., descriptions, table data, etc.). In certain embodiments, the use of a chain-of-thought prompt can improve extraction performance because it lets the model "think" through what it sees on the page first, before jumping straight to attempting to parse the media objects within the page. In some examples, this approach boosts reliability and performance for correct extractions.

In some embodiments, the chain-of-thought reasoning includes an auto-regressive reasoning approach. In certain embodiments, the set of second models is configured to determine a piece of content data corresponding to a piece of content. In some embodiments, a piece of content data includes a content identifier (ID) (e.g., a box ID, etc.), a model content type, a content description (e.g., a summary, a transcript of a chart, extracted data from a table, a description of an image, etc.), and/or the like. In some examples, a content ID is a box ID on a page. In certain embodiments, the model content type includes at least one selected from a group consisting of a text content type, an image content type, a table content type, a table content type, a chart content type, and/or the like. In some embodiments, the layout content type corresponding to a piece of content is different from the model content type. In certain examples, the layout content type 122 indicates an image content type for the piece of content, and the model content type for the piece of content indicates a text content type. In some embodiments, a content ID is a content ID (e.g., a single-digit content ID, a double-digit content ID, etc.) for a page (e.g., each page has a set of content IDs, etc.).

According to certain embodiments, a system allows the set of second models to capture contextual surrounding information during the extraction process, for example, enabling higher quality extractions. In some examples, the system can get safer, auditable and/or higher quality pieces of content data (e.g., visual elements) with the addition of bounding box mappings. In some examples, for each media element that has been identified as a table, the system, by using the set of second models, generates and/or receives a content description that is a description of the table. In certain examples, for each visual element that has been identified as a chart, the system, by using the set of second models, generates and/or receives a content description that is a description of the chart. In some examples, for each visual element that has been identified as a diagram, the system, by using the set of second models, generates and/or receives a content description that is a description of the diagram.

According to some embodiments, at process 135, the system provides the one or more pieces of content data to generate one or more multimedia object models 140. In certain embodiments, the multimedia object models 140 include one or more text objects 142, one or more chart objects 144, one or more diagram objects 145, one or more table objects 146, and/or the like. In some embodiments, at process 121, the system provides one or more text strings 128 to generate the one or more text objects 142. In certain embodiments, the system provides text string 128 to generate the one or more text objects 142 bypassing the process 130 of applying the set of second models.

According to certain embodiments, at process 147, the system updates one or more pieces of content data to generate one or more pieces of updated content data, for example, by expanding and/or combining the one or more pieces of layout data using the one or more pieces of content data. In some examples, the system updates a piece of content data by replacing and/or adding the piece of content data generated by the process 130 of applying the set of second models to a corresponding piece of layout data. In certain examples, the piece of content data and the piece of layout data, both corresponding a piece of content (e.g., media content 530 in FIG. 5A and/or FIG. 5B), include a same content ID (e.g., box ID, etc.). In some examples, the system generates and replaces the (e.g., resolution) layout content type in a piece of layout data with the model content type in the corresponding piece of content data. In certain examples, the system replaces and/or adds a content description in the piece of content data to the corresponding piece of layout data. In some embodiments, a piece of layout data and/or a piece of updated content data uses the JSON data format.

According to some embodiments, at process 149, the system generates output data 150 (e.g., a set of data models etc.) based on the one or more pieces of updated content data. In certain embodiments, the output data 150 includes one or more document objects 152, one or more page objects 154, one or more content objects 156, and/or the like. In some examples, this approach enables retrieval augmented generation workflows on one or more aspects (e.g., all aspects) of the document, and to a higher quality than existing systems. In some embodiments, the system includes one or more locally hosted and/or API (application programming interface) based models, uses custom prompting (e.g., extraction prompt in the process 132, etc.), and/or drawing and pre-processing of documents to achieve better contextual performance.

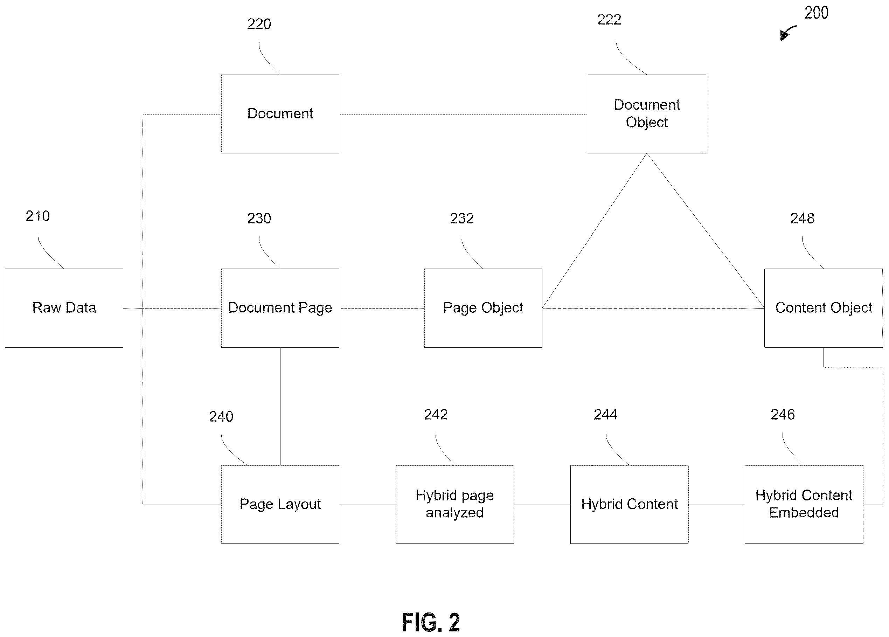

FIG. 2 is a simplified diagram showing a diagram and/or workflow 200 for document processing according to certain embodiments of the present disclosure. This diagram is merely an example. One of ordinary skill in the art would recognize many variations, alternatives, and modifications. The diagram and/or workflow 200 includes processes and/or components 210-248. Although the above has been shown using a selected group of processes and/or components for the diagram and/or workflow 200, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the diagram and/or workflow 200 are performed by a system (e.g., the computing system 600). In certain examples, some or all processes (e.g., steps) of the diagram and/or workflow 200 are performed by a computer and/or a processor directed by a code. For example, a computer includes a server computer and/or a client computer (e.g., a personal computer). In some examples, some or all processes (e.g., steps) of the diagram and/or workflow 200 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to certain embodiments, the system receives raw data 210, for example, an unstructured document. In some embodiments, the system generates a digitized document 220 based on the raw data 210, and further generates a document object 222. In certain embodiments, the system identifies one or more document pages 230 based on the raw data 210, and generates one or more page objects 232. In some embodiments, each document page 230 corresponds to a page object. In certain embodiments, the system determines a page layout 240 for a document page 230, for example, using a layout model. In some embodiments, the system generates one or more pieces of layout data for one or more pieces of content on the document page 230. In certain embodiments, a piece of layout data includes a content ID, a layout content type, a layout indication, a piece of layout content data, an order indication, and/or the like.

According to some embodiments, at process 242, the system analyzes a hybrid page using a multimodal model, also referred to as a multimodal computing model. In certain embodiments, a hybrid page includes one or more media elements (e.g., one or more images, one or more charts, one or more tables, etc.). In some embodiments, the system generates one or more pieces of hybrid content 244 using the multimodal model. In certain embodiments, a piece of hybrid content is represented by a piece of content data including a content ID, a content type, a layout indication, a content description, and/or the like. In some embodiments, the system updates a piece of layout data by embedding the content description and/or updating the layout content type with the content type (e.g., changing an image content type to a text content type, etc.) to generate a piece of updated content data 246.

According to certain embodiments, the system generates a content object 248 based on the piece of updated content data 246. In some embodiments, the system generates an ontology including the document object 222, one or more page objects 232, and one or more content objects 248.

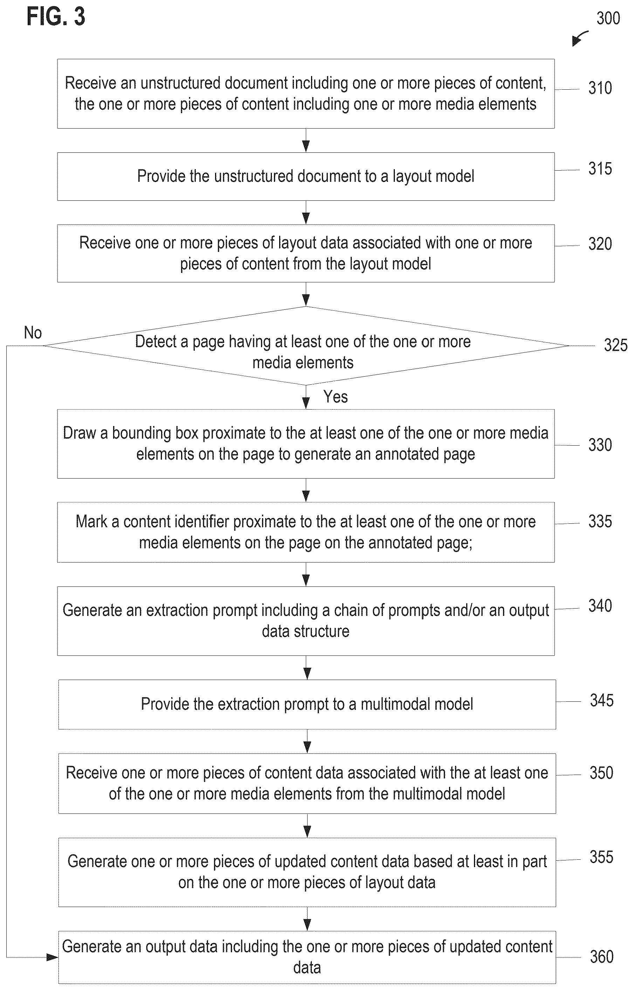

FIG. 3 is a simplified diagram showing a method 300 for document processing according to certain embodiments of the present disclosure. This diagram is merely an example. One of ordinary skill in the art would recognize many variations, alternatives, and modifications. The method 300 includes processes 310-360. Although the above has been shown using a selected group of processes for the method 300, there can be many alternatives, modifications, and variations. For example, some of the processes may be expanded and/or combined. Other processes may be inserted into those noted above. Depending upon the embodiments, the sequence of processes may be interchanged with others replaced. Further details of these processes are found throughout the present disclosure.

In some embodiments, some or all processes (e.g., steps) of the method 300 are performed by a system (e.g., the computing system 600). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives an unstructured document including one or more pieces of content. In certain embodiments, the one or more pieces of content include one or more media elements. In some embodiments, the one or more pieces of content include one or more unstructured text strings.

According to certain embodiments, at process 315, the system provides the unstructured document to a layout model. In certain embodiments, the layout model is trained using a plurality of training documents. In some embodiments, at least one training document includes one or more annotations to one or more pieces of content and one or more orders associated with one or more pieces of content. For example, an example annotated page is illustrated in FIG. 5B.

According to some embodiments, at process 320, receives one or more pieces of layout data associated with one or more pieces of content from the layout model, each piece of layout data of the one or more pieces of layout data including a content ID (e.g., a box ID), a layout indication, a content type, a piece of layout content data, and/or the like. In certain embodiments, the content type includes at least one selected from a group consisting of a text content type and a media content type. In some embodiments, a piece of layout data includes an order associated with the piece of content on the page. The layout model may effectively generate a form of structured data, e.g., a structured version of the document, including for example, metadata indicative of content type (text v. media), content ID and spatial layout, suitable for subsequent processing.

According to certain embodiments, at process 325, the system detects or identifies (for example from the structured data / metadata) a page including at least one of the one or more media elements. In some embodiments, if the page includes a media element, the system processes the page. Thus, the layout model may effectively determine or control which data is provided for further processing as explained below.

According to some embodiments, at process 330, the system may annotate the page, for example by drawing a bounding box, based on the at least one piece of layout data corresponding to at least one of the one or more media elements, proximate to the at least one of the one or more media elements on the page to generate an annotated page. In certain embodiments, at process 335, the system marks a content identifier proximate to the at least one of the one or more media elements on the annotated page. In some embodiments at least one of the one or more media elements on the page includes a first media element and a second media element, wherein the bounding box is a first bounding box corresponding to the first media element, wherein the method further comprises drawing a second bounding box proximate to the second media element in the page, wherein the annotated page includes the first bounding box and the second bounding box.

According to certain embodiments, at process 340, the system generates an extraction prompt based at least in part on the one or more pieces of layout data / metadata. In some embodiments, the extraction prompt includes the annotated page. In certain embodiments, the extraction prompt includes an indication of an output data structure or output data schema (e.g., a JSON structure, etc.). In some embodiments, the output data structure includes a content identifier (e.g., a box identifier, etc.), a content type, a layout indication, a context indication, a content description, and/or the like.

In some embodiments, the extraction prompt includes a chain-of-thought prompt (e.g., a prompt requesting a chain of actions, a series of prompts, etc.). In certain embodiments, the chain-of-thought prompt includes at least one request selected from a group consisting of a request for determining a content type, a request for determining a context for a piece of content, and a request for extracting the content. In some embodiments, the system provides the extraction prompt to the set of second models (e.g., a multimodal computing model, etc.). In certain embodiments, the extraction prompt includes a chain-of-thought prompt including a first request and a second request, where the first request is to be ingested by a multimodal computing model before the second request. In some embodiments, the extraction prompt includes a chain of prompts including a first prompt and a second prompt, where the first prompt is to be ingested by a multimodal computing model before the second prompt.

According to certain embodiments, at process 345, the system provides the extraction prompt to a multimodal model. In some embodiments, the system provides the extraction prompt and the annotated page to the multimodal model.

According to some embodiments, at process 350, the system receives one or more pieces of content data associated with the at least one of the one or more media elements from the multimodal model. In certain embodiments, a piece of content data includes a content identifier, a content type, and a content description. In some embodiments, a layout content type (e.g., image content type) associated with a piece of media element is different from a content type (e.g., text content type) associated with the piece of media element.

According to certain embodiments, at process 355, the system generates a piece of updated content data based at least in part on the one or more pieces of layout data. In some embodiments, the system generates the piece of updated content data by updating the content type. In certain embodiments, the system generates the piece of updated content data by replacing the piece of layout content data with the content description associated with a piece of media element.

According to some embodiments, at process 360, the system generates an output including the one or more pieces of updated content data. In certain embodiments, the output includes one or more data objects including, for example, one or more document objects, one or more page objects, one or more content objects, and/or the like. In some embodiments, the system extracts one or more pieces of text data by applying an optical character recognition algorithm to the one or more text strings. In some embodiments, the system extracts one or more pieces of text data within a bounding box identified by the layout model by applying an optical character recognition algorithm to the one or more text strings. In certain embodiments, the system generates an output including the one or more pieces of text data. In some embodiments, the output includes one or more content objects representing the one or more pieces of text data.

Example embodiments may provide improvements in terms of extraction accuracy, particularly for non-text data. Additionally or alternatively, example embodiments may provide computational efficiencies by use of selective or constrained processing of documents, e.g., by the layout model identifying page(s) of an unstructured document having one or more media elements and routing only those page(s) for input to a multimodal computing model for processing, which processing may otherwise be intensive. Page(s) not having one or more media elements, e.g. text data, may not be processed by the multimodal computing model and may directly be provided as part of the output data. Example embodiments are also scalable by such automated routing of pages comprising text-only data to output data and hybrid pages to multimodal computing model processing and may provide more consistent output while reducing hallucinations.

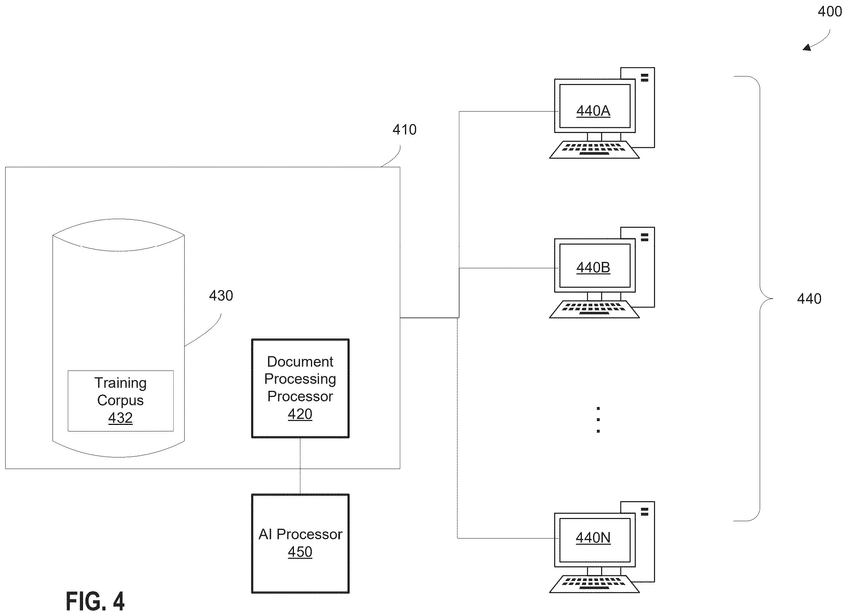

FIG. 4 is an illustrative computing environment 400 for document processing according to certain embodiments of the present disclosure. FIG. 4 is merely an example. One of ordinary skill in the art would recognize many variations, alternatives, and modifications. In some embodiments, the computing environment 400 includes one or more document processing systems 410, one or more computing devices 440 (e.g., a computing device 440A, a computing device 440B, ... a computing device 440N, etc.), and one or more AI processors 450. In certain embodiments, the document processing system 410 includes one or more document processing processors 420 and one or more data repositories 430.

In some embodiments, one or more data repositories 430 include a training corpus 432, for example, including annotated pages to train the layout model. In certain embodiments, the computing device 440 may include and/or access at least a part of the functionality of the document processing system 410. Although the above has been shown using a selected group of components in the computing environment 400, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the document processing system 410 and/or the document processing processor 420 receives one or more unstructured documents. In certain embodiments, an unstructured document includes one or more unstructured text strings and one or more media elements. In some embodiments, an unstructured text string is also referred to as a piece of text content that includes only text. In certain embodiments, a media element is also referred to as a piece of media content that includes at least one media component including, for example, such as an image, a table, a diagram, a chart, a piece of audio content, a piece of video content, and/or the like. In some embodiments, the document processing system 410 and/or the document processing processor 420 encodes documents based on a document type (e.g., PDF document, CAD document, etc.) and/or one or more document contents in the document.

According to certain embodiments, the document processing system 410 and/or the document processing processor 420 applies a set of first models (e.g., layout models, OCR algorithms, etc.) to an unstructured document. In some embodiments, the set of first models or at least a part of the set of first models is hosted on the one or more AI processors 450. In some embodiments, when the process 105 includes two or more unstructured documents, the document processing system 410 and/or the document processing processor 420 processes the unstructured documents sequentially (e.g., one document at a time, etc.). In certain embodiments, the set of first models include a layout model and/or a character recognition model. In some embodiments, a layout model includes a transformer-based layout model. In certain examples, the layout model is hosted on the AI processor 450. In certain embodiments, the layout model is trained using a set of training documents. In some examples, the layout model is a customized layout model, for example, a customized model trained using a set of training documents.

In certain embodiments, the set of training documents includes annotated documents, where an annotated document includes an indication of a content type of a piece of content on a document page, an indication of layout information of the piece of content, an order indication (e.g., an order indicated by identifiers (IDs), etc.) of the piece of content, and/or the like. In some examples, an indication of the layout data includes a bounding box around the piece of content. In certain examples, an order indication includes an order for processing the piece of content. In some examples, the order indication includes a number indicating the order. In certain examples, a first piece of content is associated with a first order indication and a second piece of content is associated with a second order indication, where the first and second order indications provide information that the first piece of content is to be processed before the second piece of content. For example, the left column data associated with an ID (identifier) 3, is to be processed before the right column data associated with an ID 4.

According to some embodiments, the document processing system 410 and/or the document processing processor 420 generates and/or receives one or more pieces of layout data corresponding to one or more pieces of content in the unstructured document using the layout model. In certain embodiments, the document processing system 410 and/or the document processing processor 420 generates and/or receives a piece of layout data for every piece of content (e.g., a paragraph, an image, a chart, a table, etc.) in the unstructured document. In some embodiments, a piece of layout data includes a layer content identifier (ID), a type classification, a layout indication 124, a classification likelihood, a piece of layout content data (e.g., a text string, other layout content data, etc.), and/or the like. In some embodiments, a content ID is a content ID (e.g., a single-digit content ID, a double-digit content ID, etc.) for a page (e.g., each page has a set of content IDs, etc.). In certain embodiments, the type classification, also referred to as a layout content type, includes at least one selected from a group consisting of a text content type and a media content type. In some embodiments, the media content type includes at least one selected from a group consistent of an image content type, a table content type, an image content type, a chart content type, and/or the like.

In certain embodiments, a layout indication includes information of a bounding box, a center position, and/or other position data. In some embodiments, a classification likelihood is a confidence score of the type classification. In certain embodiments, the text string is extracted by an OCR program for a piece of text content, for example, text content within a box, a paragraph, and/or the like. In some embodiments, a piece of layout data includes an order indication of a piece of content (e.g., an order number on a page, an order number within the documents, etc.).

According to certain embodiments, the document processing system 410 and/or the document processing processor 420 determines whether media content is detected on a document page, also referred to as a page. In some embodiments, the document processing system 410 and/or the document processing processor 420 identifies one or more document pages including media content. In certain embodiments, if media content is detected on the document page, the document processing system 410 and/or the document processing processor 420 routes the document page to a set of second models (e.g., one or more multimodal computing models, etc.). In certain embodiments, a multimodal computing model includes a vision large language model (LLM) (e.g., a GPT-4o model, a Claude model, etc.). In some embodiments, if media content is detected on the document page, the document processing system 410 and/or the document processing processor 420 draws one or more bounding boxes on the document page to generate an annotated page, where the one or more bounding boxes are drawn according to one or more layout indications in the piece of layout data corresponding to one or more pieces of media content. In certain embodiments, if media content is detected on the document page, the document processing system 410 and/or the document processing processor 420 draws one or more bounding boxes and optionally annotates the one or more bounding boxes with IDs (identifiers) on the document page according to one or more layout indications in the piece of layout data corresponding to one or more pieces of media content to generate an annotated page. In some embodiments, the document processing system 410 and/or the document processing processor 420 instructs the set of second models to capture the content inside one or more drawn bounding boxes.

FIG. 5A illustrates an example document page 500A and FIG. 5B illustrates an example annotated document page 500B. FIGS. 5A and 5B are merely examples. One of ordinary skill in the art would recognize many variations, alternatives, and modifications. In the example illustrated, the document page 500A includes a piece of text content 510, a piece of text content 520, a piece of media content 530, and a piece of text content 540. In some examples, the document processing system 410 and/or the document processing processor 420 draws a bounding box 532 around the piece of media content 530 on the document page 500B, for example, based on a layout indication in the piece of layout data. In certain examples, the document processing system 410 and/or the document processing processor 420 marks an identifier 534 on the document page 500B. In some examples, the document processing system 410 and/or the document processing processor 420 marks an identifier 534 on the document page 500B based on a corresponding content identifier. In certain embodiments, the piece of text content 520 can be used as context information for the piece of media content 530.

Referring back to FIG. 4, according to some embodiments, the document processing system 410 and/or the document processing processor 420 uses a layout model, an OCR algorithm, and/or a vision large language model (e.g., a vision LLM, etc.) with a custom setup. In some embodiments, the document processing system 410 and/or the document processing processor 420 can be used as a generic PDF document parsing product, which is highly scalable by using inexpensive layout transformer models to generate layout classifications enabling an understanding of which document pages the document processing system 410 and/or the document processing processor 420 can run a box-constrained OCR (for text) (e.g., applying an OCR algorithm to the text within a bounding box), and which pages to run the vision LLM to extract and transcribe one or more pieces of media content. For example, tables can be extracted into JSON (JavaScript Object Notation) data format and/or Markdown data format (e.g., a lightweight markup language), and charts can be transcribed into detailed text.

According to certain embodiments, the document processing system 410 and/or the document processing processor 420 applies the set of second models to one or more identified document pages, for example, including a process to generate an extraction prompt and/or a process of a multimodal computing model performing a chain-of-thought reasoning extraction. In some embodiments, the set of second models or at least a part of the set of second models is hosted on the one or more AI processors 450. In certain examples, the multimodal computing model is hosted on the AI processor 450. In certain embodiments, the document processing system 410 and/or the document processing processor 420 generates an extraction prompt to be provided with the document page (e.g., a document page in the input document, etc.). In some embodiments, the extraction prompt includes the annotated page. In certain embodiments, the extraction prompt includes an indication of an output data structure (e.g., a JSON structure, etc.). In some embodiments, the output data structure includes a content identifier (e.g., a box identifier, etc.), a content type, a layout indication, a context indication, a content description, and/or the like.

In some embodiments, the extraction prompt includes one or more prompts requesting a chain of actions, also referred to as a chain-of-thought prompt. In some embodiments, a chain of prompts is a chain-of-thought prompt including two or more requests. In certain embodiments, a prompt or request includes at least one selected from a group consisting of a request for determining a content type, a request for determining a context for a piece of content, and a request for extracting the content. In some embodiments, the document processing system 410 and/or the document processing processor 420 provides the extraction prompt to the set of second models (e.g., a multimodal computing model, etc.). In certain embodiments, the extraction prompt includes a chain-of-thought prompt including a first request and a second request, where the first request is to be ingested by a multimodal computing model before the second request. In some embodiments, the extraction prompt includes a chain of prompts including a first prompt and a second prompt, where the first prompt is to be ingested by a multimodal computing model before the second prompt.

According to some embodiments, the document processing system 410 and/or the document processing processor 420 requests the set of second models to conduct the chain-of-thought reasoning extraction using a chain-of-thought prompt (e.g., one prompt, one or more prompts, etc.). For example, the one or more chain-of-thought prompts include explicit requests like "Let's think step by step", which forces the set of second models to output its reasoning as it understands and processes a document page. In some examples, the set of second models can finalize with the output (e.g., JSON output, etc.) for the parsed media objects (e.g., descriptions, table data, etc.). In certain embodiments, the use of a chain-of-thought prompt can improve extraction performance because it lets the model "think" through what it sees on the page first, before jumping straight to attempting to parse the media objects within the page. In some examples, this approach boosts reliability and performance for correct extractions.

In some embodiments, the chain-of-thought reasoning includes an auto-regressive reasoning approach. In certain embodiments, the set of second models is configured to determine a piece of content data corresponding to a piece of content. In some embodiments, a piece of content data includes a content identifier (ID) (e.g., a box ID, etc.), a model content type, a content description (e.g., a summary, a transcript of a chart, extracted data from a table, a description of an image, etc.), and/or the like. In some examples, a content ID is a box ID on a page. In certain embodiments, the model content type includes at least one selected from a group consisting of a text content type, an image content type, a table content type, a table content type, a chart content type, and/or the like. In some embodiments, the layout content type corresponding to a piece of content is different from the model content type. In certain examples, the layout content type indicates an image content type for the piece of content, and the model content type for the piece of content indicates a text content type. In some embodiments, a content ID is a content ID (e.g., a single-digit content ID, a double-digit content ID, etc.) for a page (e.g., each page has a set of content IDs, etc.).

According to certain embodiments, a system allows the set of second models to capture contextual surrounding information during the extraction process, for example, enabling higher quality extractions. In some examples, the document processing system 410 and/or the document processing processor 420 can get safer, auditable and/or higher quality pieces of content data (e.g., visual elements) with the addition of bounding box mappings. In some examples, for each media element that has been identified as a table, the document processing system 410 and/or the document processing processor 420, by using the set of second models, generates and/or receives a content description that is a description of the table. In certain examples, for each visual element that has been identified as a chart, the document processing system 410 and/or the document processing processor 420, by using the set of second models, generates and/or receives a content description that is a description of the chart. In some examples, for each visual element that has been identified as a diagram, the document processing system 410 and/or the document processing processor 420, by using the set of second models, generates and/or receives a content description that is a description of the diagram.

According to some embodiments, the document processing system 410 and/or the document processing processor 420 provides the one or more pieces of content data to generate one or more multimedia objects. In certain embodiments, the multimedia object models include one or more text objects, one or more chart objects, one or more diagram objects, one or more table objects, and/or the like. In some embodiments, the document processing system 410 and/or the document processing processor 420 provides text data to generate the one or more text objects (e.g., the text objects 142, etc.). In certain embodiments, the document processing system 410 and/or the document processing processor 420 provides one or more text strings to generate the one or more text objects, bypassing the set of second models.

According to certain embodiments, the document processing system 410 and/or the document processing processor 420 updates one or more pieces of content data to generate one or more pieces of updated content data, for example, by expanding and/or combining the one or more pieces of layout data using the one or more pieces of content data. In some examples, the document processing system 410 and/or the document processing processor 420 updates a piece of content data by replacing and/or adding the piece of content data generated by the set of second models to a corresponding piece of layout data. In certain examples, the piece of content data and the piece of layout data, both corresponding a piece of content (e.g., content piece 530 in FIG. 5), include a same content ID (e.g., box ID, etc.). In some examples, the document processing system 410 and/or the document processing processor 420 generates and replaces the (e.g., resolution) layout content type in a piece of layout data with the model content type in the corresponding piece of content data. In certain examples, the document processing system 410 and/or the document processing processor 420 replaces and/or adds a content description in the piece of content data to the corresponding piece of layout data. In some embodiments, a piece of layout data and/or a piece of updated content data uses the JSON data format.

According to some embodiments, the document processing system 410 and/or the document processing processor 420 generates output data (e.g., the output data 150, a set of data models etc.) based on the one or more pieces of updated content data. In certain embodiments, the output data includes one or more document objects, one or more page objects, one or more content objects, and/or the like. In some examples, this approach enables retrieval augmented generation workflows on one or more aspects (e.g., all aspects) of the document, and to a higher quality than existing systems. In some embodiments, the document processing system 410 and/or the document processing processor 420 includes one or more locally hosted and/or API (application programming interface) based models, uses custom prompting (e.g., extraction prompt in the process 132, etc.), and/or drawing and pre-processing of documents to achieve better contextual performance.

According to some embodiments, the one or more data repositories 430 can include one or more layout models, one or more multimodal models, one or more documents, one or more document pages, one or more annotated pages, one or more pieces of content, one or more pieces of layout data, one or more pieces of content data, one or more pieces of updated content data, and/or the like. The repository may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by a data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

According to certain embodiments, various components in the computing environment 400 can execute software or firmware stored in a non-transitory computer-readable medium to implement various processing steps. Various components and processors of the computing environment 400 can be implemented by one or more computing devices including, but not limited to, circuits, a computer, a cloud-based processing unit, a processor, a processing unit, a microprocessor, a mobile computing device, and/or a tablet computer. In some cases, various components referenced by the computing environment 400 (e.g., the one or more document processing systems 410, the one or more document processing processors 420, the one or more computing devices 440, the one or more AI processors 450, etc.) can be implemented on a shared computing device. Alternatively, a component of the computing environment 400 can be implemented on multiple computing devices. In some implementations, various modules and components referenced by the computing environment 400 can be implemented as software, hardware, firmware, or a combination thereof. In some cases, various components referenced by the computing environment 400 can be implemented in software or firmware executed by a computing device.

Various components referenced by the computing environment 400 can communicate via or be coupled to via a communication interface, for example, a wired or wireless interface. The communication interface includes, but is not limited to, any wired or wireless short-range and long-range communication interfaces. The short-range communication interfaces may include, for example, a local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, a wide area network (WAN), cellular network interfaces, satellite communication interfaces, etc. The communication interface may be either within a private computer network, such as an intranet, or on a public computer network, such as the internet.

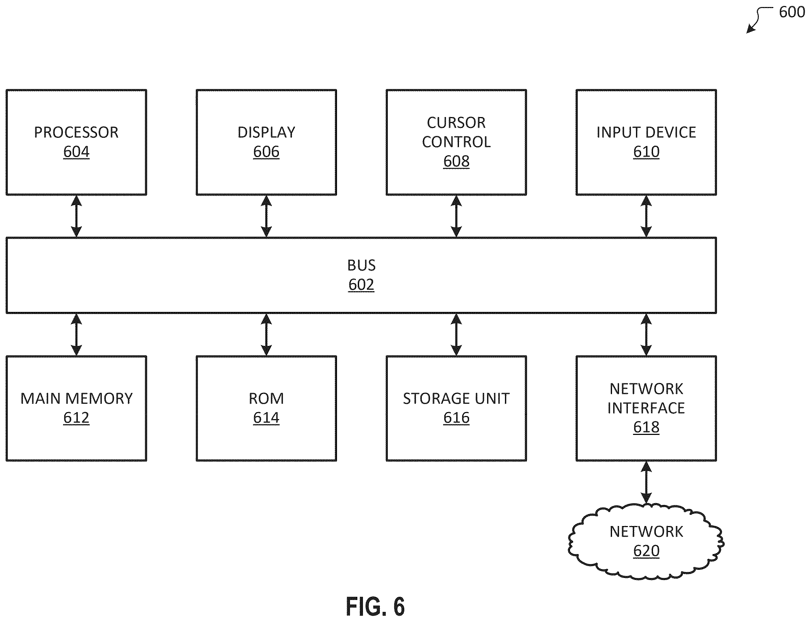

FIG. 6 is a simplified diagram showing a computing system for implementing a system 600 for document processing in accordance with at least one example set forth in the disclosure. This diagram is merely an example, which should not unduly limit the scope of the claims. One of ordinary skill in the art would recognize many variations, alternatives, and modifications.

The computing system 600 includes a bus 602 or other communication mechanism for communicating information, a processor 604, a display 606, a cursor control component 608, an input device 610, a main memory 612, a read only memory (ROM) 614, a storage unit 616, and a network interface 618. In some embodiments, some or all processes (e.g., steps) of the methods and/or processes (e.g., the diagram and/or the workflow 100, the diagram and/or the workflow 200, the method 300, etc.) disclosed herein are performed by the computing system 600. In some embodiments, the bus 602 is coupled to the processor 604, the display 606, the cursor control component 608, the input device 610, the main memory 612, the read only memory (ROM) 614, the storage unit 616, and/or the network interface 618. In certain embodiments, the network interface is coupled to a network 620. For example, the processor 604 includes one or more general purpose microprocessors. In some embodiments, the main memory 612 (e.g., random access memory (RAM), cache and/or other dynamic storage devices) is configured to store information and instructions to be executed by the processor 604. In certain embodiments, the main memory 612 is configured to store temporary variables or other intermediate information during execution of instructions to be executed by processor 604. For example, the instructions, when stored in the storage unit 616 accessible to processor 604, render the computing system 600 into a special-purpose machine that is customized to perform the operations specified in the instructions. In some embodiments, the ROM 614 is configured to store static information and instructions for the processor 604. In certain embodiments, the storage unit 616 (e.g., a magnetic disk, optical disk, or flash drive) is configured to store information and instructions.

In some embodiments, the display 606 (e.g., a cathode ray tube (CRT), an LCD display, or a touch screen) is configured to display information to a user of the computing system 600. In some embodiments, the input device 610 (e.g., alphanumeric and other keys) is configured to communicate information and commands to the processor 604. For example, the cursor control component 608 (e.g., a mouse, a trackball, or cursor direction keys) is configured to communicate additional information and commands (e.g., to control cursor movements on the display 606) to the processor 604.

According to certain embodiments, a method for document processing is provided. In some examples, the method includes receiving an unstructured document including one or more pieces of content, the one or more pieces of content including one or more unstructured text strings and one or more media elements; providing the unstructured document to a layout model; receiving one or more pieces of layout data associated with one or more pieces of content from the layout model, each piece of layout data of the one or more pieces of layout data including a layout indication and a content type, the content type including at least one selected from a group consisting of a text content type and a media content type; identifying a page including at least one of the one or more media elements; generating an extraction prompt including at least one piece of layout data corresponding to at least one of the one or more media elements; providing the extraction prompt to a multimodal model; receiving one or more pieces of content data associated with the at least one of the one or more media elements from the multimodal model; and generating an output data including the one or more pieces of content data. The method is performed using one or more processors. For example, the method is implemented according to at least FIG. 1, FIG. 2, FIG. 3 and/or FIG. 4.

In some embodiments, the method further comprises: drawing a bounding box, based on the at least one piece of layout data corresponding to at least one of the one or more media elements, proximate to the at least one of the one or more media elements on the page to generate an annotated page; wherein the providing the extraction prompt to a multimodal model includes providing the extraction prompt and the annotated page to the multimodal model. In certain embodiments, at least one of the one or more media elements on the page includes a first media element and a second media element, wherein the bounding box is a first bounding box corresponding to the first media element, wherein the method further comprises drawing a second bounding box proximate to the second media element in the page, wherein the annotated page includes the first bounding box and the second bounding box. In some embodiments, the method further comprises: marking a content identifier proximate to the at least one of the one or more media elements on the page to generate an annotated page; wherein the providing the extraction prompt to a multimodal model includes providing the extraction prompt and the annotated page to the multimodal model.

In certain embodiments, the extraction prompt includes an indication of an output data structure, wherein at least one of the one or more pieces of content data is in the output data structure. In some embodiments, the output data structure includes a content identifier, a layout indication, a context indication, and a content description. In certain embodiments, the extraction prompt includes a chain-of-thought prompt, wherein the chain-of-thought prompt including at least one request selected from a group consisting of a first request for determining a content type, a second request for determining a context for a piece of content, and a third request for extracting the piece of content. In some embodiments, each piece of layout data of the one or more pieces of layout data further includes a layout content identifier and a piece of layout content data. In some embodiments, each piece of content data of the one or more pieces of content data includes a content identifier, a content type, and a content description.

In some embodiments, a layout content type associated with a piece of media element is different from a content type associated with the piece of media element, wherein the method further comprises generating a piece of updated content data with the content type. In some embodiments, the method further comprises: generating a piece of updated content data by replacing the piece of layout content data with the content description associated with a piece of media element. In certain embodiments, the each piece of layout data includes an order associated with the piece of content on the page. In some embodiments, the method further comprises: extracting one or more pieces of text data by applying an optical character recognition algorithm to the one or more text strings; wherein the generating an output data includes generating the output data including the one or more pieces of content data corresponding to the one or more media elements and the one or more pieces of text data. In certain embodiments, the layout model is trained using a plurality of training documents, wherein at least one training document includes one or more annotations to one or more pieces of content and one or more orders associated with one or more pieces of content.

According to certain embodiments, a system for document processing is provided. In some examples, the system includes: one or more memories comprising instructions stored thereon; and one or more processors configured to execute the instructions and perform a set of operations comprising: receiving an unstructured document including one or more pieces of content, the one or more pieces of content including one or more unstructured text strings and one or more media elements; providing the unstructured document to a layout model; receiving one or more pieces of layout data associated with one or more pieces of content from the layout model, each piece of layout data of the one or more pieces of layout data including a layout indication and a content type, the content type including at least one selected from a group consisting of a text content type and a media content type; identifying a page including at least one of the one or more media elements; generating an extraction prompt including at least one piece of layout data corresponding to at least one of the one or more media elements; providing the extraction prompt to a multimodal model; receiving one or more pieces of content data associated with the at least one of the one or more media elements from the multimodal model; and generating an output data including the one or more pieces of content data. For example, the system is implemented according to at least FIG. 1, FIG. 2, FIG. 3 and/or FIG. 4.

In some embodiments, the set of operations further comprise: drawing a bounding box, based on the at least one piece of layout data corresponding to at least one of the one or more media elements, proximate to the at least one of the one or more media elements on the page to generate an annotated page; wherein the providing the extraction prompt to a multimodal model includes providing the extraction prompt and the annotated page to the multimodal model. In certain embodiments, at least one of the one or more media elements on the page includes a first media element and a second media element, wherein the bounding box is a first bounding box corresponding to the first media element, wherein the set of operations further comprise drawing a second bounding box proximate to the second media element in the page, wherein the annotated page includes the first bounding box and the second bounding box. In some embodiments, the set of operations further comprise: marking a content identifier proximate to the at least one of the one or more media elements on the page to generate an annotated page; wherein the providing the extraction prompt to a multimodal model includes providing the extraction prompt and the annotated page to the multimodal model.

In certain embodiments, the extraction prompt includes an indication of an output data structure, wherein at least one of the one or more pieces of content data is in the output data structure. In some embodiments, the output data structure includes a content identifier, a layout indication, a context indication, and a content description. In certain embodiments, the extraction prompt includes a chain-of-thought prompt, wherein the chain-of-thought prompt including at least one request selected from a group consisting of a first request for determining a content type, a second request for determining a context for a piece of content, and a third request for extracting the piece of content. In some embodiments, each piece of layout data of the one or more pieces of layout data further includes a layout content identifier and a piece of layout content data. In some embodiments, each piece of content data of the one or more pieces of content data includes a content identifier, a content type, and a content description.

In some embodiments, a layout content type associated with a piece of media element is different from a content type associated with the piece of media element, wherein the set of operations further comprise generating a piece of updated content data with the content type. In some embodiments, the set of operations further comprise: generating a piece of updated content data by replacing the piece of layout content data with the content description associated with a piece of media element. In certain embodiments, the each piece of layout data includes an order associated with the piece of content on the page. In some embodiments, the set of operations further comprise: extracting one or more pieces of text data by applying an optical character recognition algorithm to at least one of the one or more unstructured text strings; wherein the generating an output data includes generating the output data including the one or more pieces of content data corresponding to the one or more media elements and the one or more pieces of text data. In certain embodiments, the layout model is trained using a plurality of training documents, wherein at least one training document includes one or more annotations to one or more pieces of content and one or more orders associated with one or more pieces of content.

According to certain embodiments, a non-transitory computer-readable storage medium having instructions for document processing that, when executed by one or more processors, cause the one or more processors to perform a set of operations comprising: receiving an unstructured document including one or more pieces of content, the one or more pieces of content including one or more unstructured text strings and one or more media elements; providing the unstructured document to a layout model; receiving one or more pieces of layout data associated with one or more pieces of content from the layout model, each piece of layout data of the one or more pieces of layout data including a layout indication and a content type, the content type including at least one selected from a group consisting of a text content type and a media content type; identifying a page including at least one of the one or more media elements; generating an extraction prompt including at least one piece of layout data corresponding to at least one of the one or more media elements; providing the extraction prompt to a multimodal model; receiving one or more pieces of content data associated with the at least one of the one or more media elements from the multimodal model; and generating an output data including the one or more pieces of content data. For example, the non-transitory computer-readable storage medium is implemented according to at least FIG. 1, FIG. 2, FIG. 3 and/or FIG. 4.

In some embodiments, the set of operations further comprise: drawing a bounding box, based on the at least one piece of layout data corresponding to at least one of the one or more media elements, proximate to the at least one of the one or more media elements on the page to generate an annotated page; wherein the providing the extraction prompt to a multimodal model includes providing the extraction prompt and the annotated page to the multimodal model. In certain embodiments, at least one of the one or more media elements on the page includes a first media element and a second media element, wherein the bounding box is a first bounding box corresponding to the first media element, wherein the set of operations further comprise drawing a second bounding box proximate to the second media element in the page, wherein the annotated page includes the first bounding box and the second bounding box. In some embodiments, the set of operations further comprise: marking a content identifier proximate to the at least one of the one or more media elements on the page to generate an annotated page; wherein the providing the extraction prompt to a multimodal model includes providing the extraction prompt and the annotated page to the multimodal model.

In certain embodiments, the extraction prompt includes an indication of an output data structure, wherein at least one of the one or more pieces of content data is in the output data structure. In some embodiments, the output data structure includes a content identifier, a layout indication, a context indication, and a content description. In certain embodiments, the extraction prompt includes a chain-of-thought prompt, wherein the chain-of-thought prompt including at least one request selected from a group consisting of a first request for determining a content type, a second request for determining a context for a piece of content, and a third request for extracting the piece of content. In some embodiments, each piece of layout data of the one or more pieces of layout data further includes a layout content identifier and a piece of layout content data. In some embodiments, each piece of content data of the one or more pieces of content data includes a content identifier, a content type, and a content description.

In some embodiments, a layout content type associated with a piece of media element is different from a content type associated with the piece of media element, wherein the set of operations further comprise generating a piece of updated content data with the content type. In some embodiments, the set of operations further comprise: generating a piece of updated content data by replacing the piece of layout content data with the content description associated with a piece of media element. In certain embodiments, the each piece of layout data includes an order associated with the piece of content on the page. In some embodiments, the set of operations further comprise: extracting one or more pieces of text data by applying an optical character recognition algorithm to at least one of the one or more unstructured text strings; wherein the generating an output data includes generating the output data including the one or more pieces of content data corresponding to the one or more media elements and the one or more pieces of text data. In certain embodiments, the layout model is trained using a plurality of training documents, wherein at least one training document includes one or more annotations to one or more pieces of content and one or more orders associated with one or more pieces of content.

For example, some or all components of various embodiments of the present disclosure each are, individually and/or in combination with at least another component, implemented using one or more software components, one or more hardware components, and/or one or more combinations of software and hardware components. In an example, some or all components of various embodiments of the present disclosure each are, individually and/or in combination with at least another component, implemented in one or more circuits, such as one or more analog circuits and/or one or more digital circuits. In an example, while the embodiments described above refer to particular features, the scope of the present disclosure also includes embodiments having different combinations of features and embodiments that do not include all of the described features. In an example, various aspects of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented, for example, as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations, one or more features from a combination can in some cases be removed from the combination, and a combination may, for example, be directed to a sub-combination or variation of a sub-combination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method for document processing, the method comprising:
receiving an unstructured document including one or more pieces of content, the one or more pieces of content including one or more unstructured text strings and one or more media elements;
providing the unstructured document to a layout model;
receiving one or more pieces of layout data associated with one or more pieces of content from the layout model, each piece of layout data of the one or more pieces of layout data including a layout indication and a content type, the content type including at least one selected from a group consisting of a text content type and a media content type;
identifying a page including at least one of the one or more media elements;
generating an extraction prompt including at least one piece of layout data corresponding to at least one of the one or more media elements;
providing the extraction prompt to a multimodal model;
receiving one or more pieces of content data associated with the at least one of the one or more media elements from the multimodal model; and
generating an output data including the one or more pieces of content data;
wherein the method is performed using one or more processors.

2. The method of claim 1, further comprising:
drawing a bounding box, based on the at least one piece of layout data corresponding to at least one of the one or more media elements, proximate to the at least one of the one or more media elements on the page to generate an annotated page;
wherein the providing the extraction prompt to a multimodal model includes providing the extraction prompt and the annotated page to the multimodal model.

3. The method of claim 2, wherein at least one of the one or more media elements on the page includes a first media element and a second media element, wherein the bounding box is a first bounding box corresponding to the first media element, wherein the method further comprises drawing a second bounding box proximate to the second media element in the page, wherein the annotated page includes the first bounding box and the second bounding box.

4. The method of any preceding claim, further comprising:
marking a content identifier proximate to the at least one of the one or more media elements on the page to generate an annotated page;
wherein the providing the extraction prompt to a multimodal model includes providing the extraction prompt and the annotated page to the multimodal model.

5. The method of any preceding claim, wherein the extraction prompt at least includes an indication of an output data structure, wherein at least one of the one or more pieces of content data is in the output data structure.

6. The method of claim 5, wherein the output data structure includes a content identifier, a layout indication, a context indication, and a content description.

7. The method of any preceding claim, wherein the extraction prompt at least includes a chain-of-thought prompt, wherein the chain-of-thought prompt including at least one request selected from a group consisting of a first request for determining a content type, a second request for determining a context for a piece of content, and a third request for extracting the piece of content.

8. The method of any preceding claim, wherein each piece of layout data of the one or more pieces of layout data further includes a layout content identifier and a piece of layout content data.

9. The method of claim 8, wherein each piece of content data of the one or more pieces of content data includes a content identifier, a content type, and a content description.

10. The method of claim 9, wherein a layout content type associated with a piece of media element is different from a content type associated with the piece of media element, wherein the method further comprises generating a piece of updated content data with the content type.

11. The method of claim 9 or claim 10, further comprising:
generating a piece of updated content data by replacing the piece of layout content data with the content description associated with a piece of media element.

12. The method of any of claims 8 to 11, wherein each piece of layout data includes an order associated with the piece of content on the page.

13. The method of any preceding claim, further comprising:
extracting one or more pieces of text data by applying an optical character recognition algorithm to at least one of the one or more unstructured text strings;
wherein the generating an output data includes generating the output data including the one or more pieces of content data corresponding to the one or more media elements and the one or more pieces of text data.

14. The method of any preceding claim, wherein the layout model is trained using a plurality of training documents, wherein at least one training document includes one or more annotations to one or more pieces of content and one or more orders associated with one or more pieces of content.

15. A system for document processing, the system comprising:
one or more memories comprising instructions stored thereon; and
one or more processors configured to execute the instructions and perform the method of any preceding claim.
